Europäisches Patentamt

(19) European Patent Office

Office européen des brevets

(11) Publication number : **0 505 126 A2**

(12) # EUROPEAN PATENT APPLICATION

(21) Application number : **92302245.3**

(22) Date of filing : **16.03.92**

(51) Int. Cl.⁵ : **G06F 3/033, G06K 11/20**

(30) Priority : **19.03.91 US 672090**

(43) Date of publication of application :
**23.09.92 Bulletin 92/39**

(84) Designated Contracting States :
**CH DE ES FR GB IT LI NL**

(71) Applicant : **LOGITECH INC**
**6505 Kaiser Drive**
**Fremont California 94555 (US)**

(72) Inventor : **Bussien, Aldo**
**Villa "Les Chancels"**
**CH-1123 Aclens (VD) (CH)**
Inventor : **Sommer, René**
**Rapille 6**
**CH-1008 Prilly (CH)**

(74) Representative : **Ayers, Martyn Lewis Stanley**
**et al**
**J.A. KEMP & CO., 14 South Square, Grays Inn**
**London WC1R 5LX (GB)**

(54) Wireless peripheral interface.

(57)    A computer peripheral system for communicating in at least one direction with a host system such as a personal computer or workstation comprises :
   a peripheral device including data encoding means and first magnetic coupling means ;
   a host adapter including second electromagnetic coupling means and data decoding means, the first electromagnetic coupling means being electromagnetically coupled to the second electromagnetic coupling means during normal operation to permit transmission of data from the peripheral device to the host adapter, the host adapter further having interface means for communication of the decoded data to the host system.

EP 0 505 126 A2

Jouve, 18, rue Saint-Denis, 75001 PARIS

Figure 3

This application relates to communications systems for peripherals for computers and workstations and particularly relates to video display cursor pointing devices such as electronic mice or trackballs.

Numerous methods for connection of peripherals to personal computers and workstations are known in the art. The most common approach is a cable connection through either an industry standard serial (RS-232) or parallel port. This approach, while workable in most instances, does suffer from some drawbacks with some peripherals.

More specifically, the use of cables with some peripherals, such as electronic mice, impose limitations on the freedom of movement of the user. In most instances, even with such limitations electronic mice have offered significant improvements over other types of data input. Nevertheless, the existence of the cable has, for at least some users, limited the usefulness of existing electronic mice.

Some techniques for providing wireless communication between a computer peripheral and a computer are known. For example, the infamous IBM PCjr used a keyboard which transmitted data signals via an infrared transmitter, with the host having an infrared receiver. This offered some improvement, but eventually was deemed unworkable because the infrared beam became unusable for communications if the transmitter became misaligned with the receiver. An electronic mouse using a similar infrared communications technique has been demonstrated, but was also eventually deemed substantially unworkable, at least in part because the mouse could not readily be kept in alignment with the receiver.

As a result, there has been a need for a communications device which would permit elimination of the cable connection between the mouse and host, while at the same time permitting reliable, continuous communication between the mouse and the host. There has also been a comparable need for a similar communications interface between the host and other peripherals, such as trackballs, keyboards, digitizing tablets and other peripherals.

The present invention substantially overcomes the limitations of the prior art and provides a wireless communications interface between low frequency peripherals and the host personal computer or workstation. In particular, the present invention provides a wireless electronic mouse, although the interface described herein may be readily adapted to other peripherals.

More specifically, the invention of the present invention uses a low frequency transmitter and receiver (or host adapter) pair, coupled electromagnetically, which eliminates the need for a cable connection between the mouse or other peripheral and the host, while at the same time permitting continuous communication therebetween without concern for alignment or obstacles which might impede infrared communications.

Although a variety of communications protocols and methods for transmission coding may be employed, one method which has been found acceptable is to provide a report frame for communicating data between the mouse and the host, or receiver. To increase the report rate higher than the relatively low bandwidth of the wireless link might otherwise permit, the report frame includes a start bits sequence and a stop bits sequence, together with X and Y (horizontal and vertical) displacement data. Preferably, error correction bits will also be provided. Special data codes may be reserved for transmitting other conditions such as switch positions for the mouse or status information.

To reduce power consumption at the mouse (transmitter) side, communication is unidirectional between the mouse and the receiver. Because of this, various other problems must be overcome. Primary among these, problems is that the receiver has no way to request a repeat transmission from the mouse, and so must discard data it cannot clearly interpret as correct. Additionally, the receiver cannot inquire concerning the characteristics of the mouse, for example to determine whether the transmitting device is a mouse, a trackball, a keyboard, or some other device; and, if a mouse, whether it is two- or three-button. This data can only be ascertained by the receiver if it is sent by the transmitter; however, predetermined default values may be used until such data is sent. Finally, where a multi-channel transmitter/receiver pair is used, the receiver and transmitter must be manually set to the same channel.

Some of the more significant problems relate to recognition of the beginning of a report. A first problem occurs in identifying, at the receiver end, the beginning of a data word. This problem may be overcome by providing a special "start" pattern of a predetermined form -- for example, "101 ". Successful identification of a start pattern is also helpful, and in at least some cases required, in establishing synchronization between the transmitter and the receiver.

A second problem occurs in maintaining synchronization. Synchronization may be successfully maintained, once established, by transmitting one or more synchronization words on a regular basis. Additionally, transmission of a synchronization word creates a defined interval of synchronization during which the start of information transmission may be made. By restricting the start of information transmission to such windows, synchronization at the report level is not lost.

The invention further comprises a method and device for selecting from among multiple channels for communication between the mouse or other peripheral and the host. In particular, an optoelectronic switch is turned on by opening a port on the mouse, which enables the channel selection logic. The user may then select a channel for operation of the peripheral by actuating one of the buttons on the mouse. The channel on which the host adapter portion of the mouse operates may be similarly changed.

It is therefore one object of the present invention to provide a method and means for wireless communications between a host personal computer or workstation and a peripheral which does not require alignment between the peripheral and a host adapter at the host, and is also not sensitive to obstacles in the line of sight path between the peripheral and the host.

It is another object of the present invention to provide method and means for wireless communication between an electronic mouse and a host personal computer or workstation.

It is a further object of the present invention to provide a method for selecting a communications channel requiring no mechanical switches.

These and other objects of the invention will be better understood from the following Detailed Description of the Invention, taken together with the appended Figures.

Figure 1 is a perspective view of a wireless electronic mouse and host adapter according to the present invention;

Figure 2 is a generalized diagram of the major components of the electronic mouse of Figure 1.

Figure 3 is a schematic block diagram of the major electronic components of the electronic mouse of Figure 1.

Figure 4 is a schematic block diagram of the receiver portion of the wireless peripheral interface of the present invention.

Figure 5 is a flow chart of the primary elements of the firmware of the present invention.

Figure 6 is a view of the access port for the channel selection logic of the present invention.

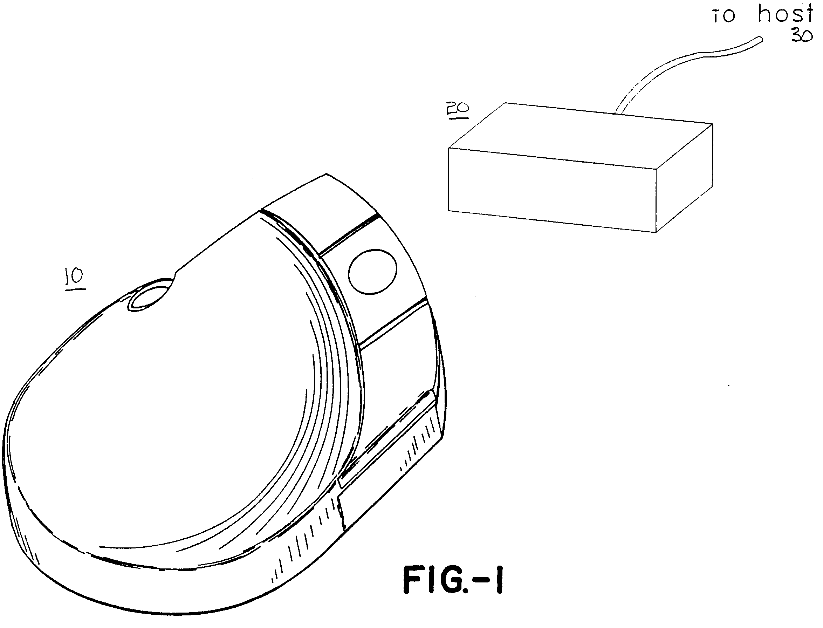

Referring first to Figure 1, the wireless operation of the present invention can better be appreciated. A peripheral 10, such as an electronic mouse or other suitable peripheral, communicates with a host adapter 20 by means of low power, low frequency signals. Other suitable peripherals include trackballs, keyboards and digitizing tablets. A suitable frequency range for communication between the mouse 10 and the host adapter 20 is on the order of 100 kHz to 160 kHz, although a broader range is also acceptable in at least some circumstances. The host adapter 20 is connected to the host system 30, such as a personal computer or work station, through any suitable communications protocol. For example, the host adapter 20 may be connected to the host 30 through a serial port (e.g., RS232) such as is commonly found on such host systems, or may be connected through a bus adapter similar to that used for the Logitech bus Mouse, or as provided in the PS/2™ series of personal computers.

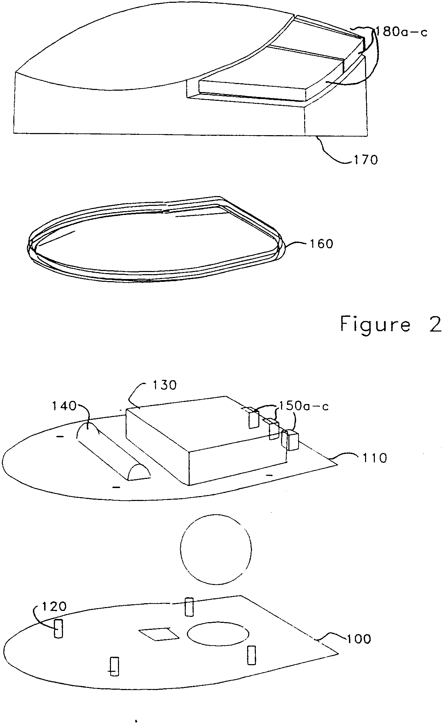

Referring next to Figure 2, the major components of the wireless mouse 10 of the present invention may be better appreciated. The lower housing 100 serves as a platform, onto which the printed circuit board 110 is located by means of locating pins 120. Affixed to the PC board 110 is a ball cage 130 such as described in U.S. Patent Application No.                            , entitled Integrated Ball Cage for Pointing Device, filed concurrently herewith and assigned to the same assignee as the present application. Also located on the printed circuit board 110 is a battery holder 140, discussed in greater detail hereinafter. Also affixed to the front portion of the PC board are a plurality of switches 150a-c for user actuation in a conventional manner. Connected to the PC board 110, but located above it within the mouse 10, is an antenna 160, retained in position by locating pins 120 and also by being sandwiched between the PC board 110 and an upper housing 170. A button plate 180, configured to provide a plurality of buttons 180a-c for actuating the switches 150a-c, snaps into an opening in the front of the upper housing 170.

The lower housing may be connected to the upper housing by means of a plurality of screws 190, although other fastening means are acceptable. Positioned with the ball cage is a rubber coated polymeric ball 200 of the sort described in the above-mentioned U.S. Patent No. 4,951,034. The ball 200 may be inserted into the ball cage 130 through an opening in the lower housing 100. In normal operation, the ball 200 is retained substantially within the ball cage 130 by means of a belly door 210, which rotatably fastens into the bottom of the lower housing 100 by a slot and groove arrangement. As is conventional, the belly door 210 contains an aperture through which the ball can contact the working surface during normal operation. During operation, the rotation of the ball is converted to digital signals by means of optomechanical encoders 220 on the printed circuit board 110 in a conventional manner. The optomechanical encoders typically include a mask, an encoding wheel, a photosource, and a pair of photodetectors, and generate a quadrature signal which can then be accurately digitized to reflect movement. Simply put, the optomechanical encoders generate a digital signal representative of the movement of the mouse across the table.

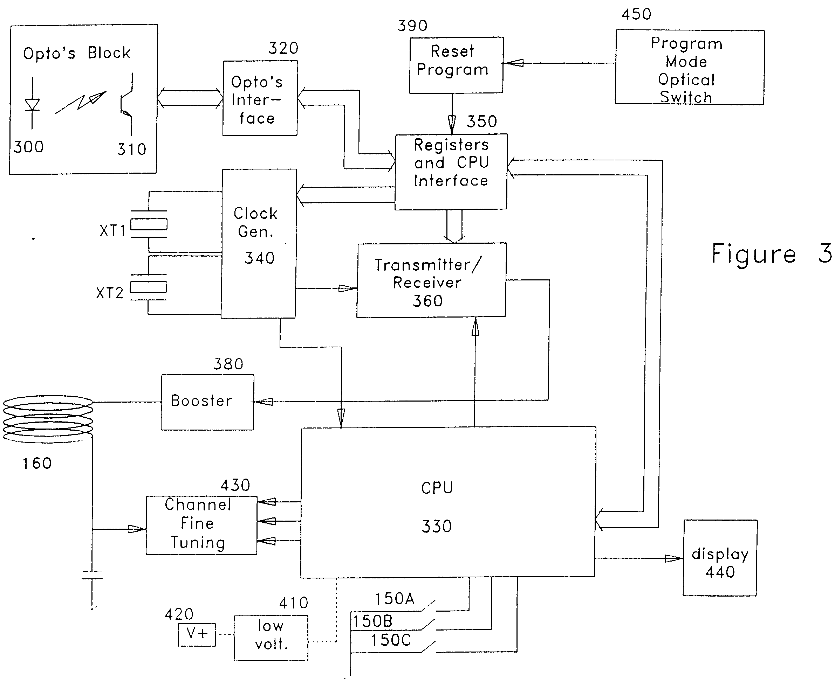

Referring next to Figure 3, which shows in schematic block diagram form the operation of the mouse and host adapter, the movement of the ball 180 across the work surface causes a pulse train to be sent from photosources 300 to photodetectors 310. The pulses received by the photodetectors 310 are sampled by an interface 320, operating under the indirect control of a CPU 330, which may for example be a low power version of a Motorola 68HC05. The interface 320 samples the photodetectors 310 in accordance with the clock signal provided by a clock generator 340. A pair of crystals XT1 and XT2 provide dual clocking frequencies for the clock generator 340 for normal, standby and sleep modes of operation. The optical interface logic 320, which is more fully described in U.S. Patent Application S. N. , incorporated herein by reference, communicates bidirectionally with register and CPU interface logic 350. The register and CPU interface logic provides a plurality of signals to the CPU 330, and also provides signals to the clock generator 340 as well as providing signals to transmitter/receiver logic 360. The clock generator logic 340 also provides a clocking signal to the transmitter logic 360, which receives a data stream from the CPU 330. The transmitter then provides an output signal to an emission coil, or antenna, 160, through a booster amplifier 380. The clock generator also provides a clocking signal to the CPU 330. The transmitted signals are picked up by a receiver in the host adapter 20, discussed in greater detail hereinafter.

Reset logic 390 may also be provided to initialize the system whenever appropriate. Power for the system is preferably provided by a battery 400 such as a lithium battery, and a low voltage detector 410 may be provided to signal low battery conditions to the user. A plurality of switches 150a-c may be provided for user actuation in a conventional manner.

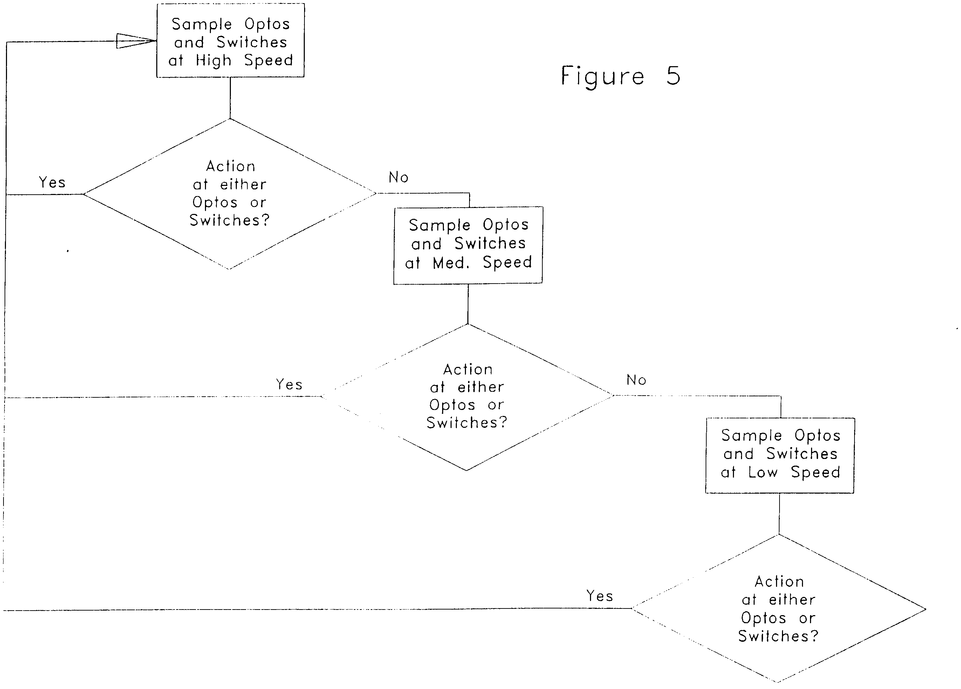

As long as the battery 400 has sufficient power, the mouse 10 will typically not turn off, but instead can operate in three power modes to conserve energy. In normal operation, such as when the mouse is being used, the optomechanical encoders with be sampled at full speed, the CPU is clocked at its nominal speed, and data is sent continuously to the host adapter. However, after a period of nonuse, for example 20 milliseconds, the mouse 10 will enter a standby mode during which the encoders are sampled less frequently, although the CPU continues to work at normal speed. After a further period of nonuse, for example 10 seconds, the mouse 10 enters a sleep mode in which the CPU and the remainder of the circuitry are in full static condition. The mouse may be waked from sleep mode by actuation of one of the buttons, and may be returned from standby to normal mode either by a move or by actuation of a button. Shown in Figure 5 is a simple flow chart describing the transitions from normal mode to standby mode to sleep mode. It will be apparent to those skilled in the art that numerous alternative approaches would also work. However, in the present instance, it can be seen that the switches and optomechanical encoders are sampled at high speed (step 510) to determine if the user has taken any action, either by moving the mouse or pushing a button. If action has been taken by the user, the mouse remains in normal mode. If no action is detected for a first period, the mouse transitions to a standby mode, and the switches and encoders are again sampled (step 520), but at a medium speed. If the sampling detects action, the mouse is switched to normal mode, at high speed. If no action occurs after a second, predetermined period, the mouse transitions to the sleep mode, operating at low frequency. In this mode, the switches are again sampled, but at a lower frequency. As before, any movement of either the mouse or the switches causes the mouse to switch to normal mode.

Transition into and from such multiple sleep modes will be discussed in greater detail hereinafter.

For simplicity and reliability, the optical interface logic 320, the clock generator 340, the register and CPU interface logic 350, the transmitter 360 and the reset logic 390 will all preferably be integrated into a single gate array.

The transmitter 360 typically communicates unidirectionally with the host adapter, and thus does not receive signals back from the host adapter 20. The transmitter, which operates at frequencies on the order of 100 kHz - 160 kHz but in many embodiments could operate in a frequency range as great as 10 kHz - 400 kHz, couples magnetically to a receiving antenna 420, where the signal is then amplified and filtered to eliminate artifacts and noise. Because the wavelength is substantially greater than the antenna length, it can be appreciated that the transmitter of the mouse described here couples magnetically or electromagnetically, rather than at radio frequencies. In this respect, the transmitter coil and the receiver coil may be thought of, in simplified terms, as a transformer.

A pair of semi-digital multipliers 430a and 430b provide + 1 and -1 multiplication of the incoming signal, similar to a sinusoidal multiplication, which serves to translate the high frequency incoming signal to a low frequency, typically on the order of 0 kHz to 4 kHz, although other frequency ranges are acceptable. To permit the envelope of the data to be reconstituted accurately, the multiplication is performed twice, with one multiplication 90 degrees out of phase with the other (i.e., a cosinusoid), the two resulting signals can then be squared, and then added to permit the signal to be reconstituted. The data may then be extracted at data output lines Data X and Data Y, and provided to the data input lines of another microprocessor 470 such as another Motorola 6805 or similar. The CPU 470 can then provide appropriate signals to the host computer 480, such as a personal computer or workstation, typically through a standard interface such as an AT bus adapter, or a serial port.

As noted previously, difficulties are encountered in the prior art in achieving accurate communication of switch activity and displacement between the mouse and the host over the relatively low speed wireless link.

For example, in at least one implementation, the speed of the wireless link is only 800 bits per second. In accordance with the present invention, two assumptions have been made: First, usually the mouse is not moving, or is moving slowly when the switch (or button) of a mouse is depressed. Second, displacements made at slow speed should be precisely recorded, while displacements made at high speed need not be recorded as accurately so long as they are within reasonable limits.

Within the limits of these assumptions, reasonably accurate and rapid reporting of displacement and switch activity information can be provided by using a multiple bit report frame which includes a start bit sequence, X and Y displacement data, at least one CRC bit, and a stop bit sequence. In an implementation which has proven successful in testing, the report frame comprises nineteen bits, of which three bits form a start bit sequence, five bits provide Y displacement data, five provide X displacement data, four provide CRC, and two bits form a stop bit sequence. Set forth below is a graphical representation of one acceptable report frame in accordance with the present invention, although numerous other permutations will provide substantially similar performance:

**1 0 1 Y Y Y Y Y X X X X X CRC CRC CRC CRC 0 0**

The five displacement bits can further be coded to provide the ability to provide switch activity reports or status reports. The displacement portion of the report frame comprises five bits, of which four bits describe the absolute value of the displacement and one bit describes the sign (+ or -) of the displacement. By assigning a positive sign to a displacement of zero, the value -0000 (typically represented, for example, by the code 00001, where the 1 represents a - sign) becomes an anomaly. That displacement value -- which can occur either in the X portion of the hame of the Y portion of the frame, can then be coded to permit transmission of switch activity or status information. Once the X or Y portion of the frame is recognized as anomalous, the other data portion of the frame can be coded to represent either switch position or status data.

For example, if a Y displacement value of 00001 is assigned to a report frame containing switch data, the X displacement portion of the frame can be used to describe the state of the switches on the mouse. Since the X portion of the data frame comprises five bits, the state of three switches (either 1 or 0) can be described by three data bits. This permits the remaining two bits to be used for Hemming codes to ensure improved reliability of the switch data.

If a Y displacement value of 00001 is assigned to reporting switch status, an X displacement value of 00001 can be assigned to other status reporting. Similar to the previous example, the Y data portion of the reporting frame is used to communicate the data. To provide communication for an adequate range of parameters, a status address frame is necessary, followed by a status data frame. One bit of the five bit Y data field can be used to toggle between status address and status data, while the remaining four bits can be used to provide either the data or the address, depending on the value of the first bit. Typical status information which needs to be transmitted includes battery status (OK, low, warning), device type (mouse, trackball, other), mouse mode (operating or programming), operational mode (high power, low power, asleep), emission channel (from a selection of eight channels, discussed in greater detail below), number of buttons (one to four, usually two or three), firmware version and hardware (e.g., ASIC) version. Other status information can also be transmitted depending upon the particular embodiment.

Additionally, it is possible to provide improved synchronization by sending one or more synchronization words on a regular basis. In a preferred implementation, several synchronization words are sent, each of which comprises a status report address (i.e., an X displacement value of 00001 ) with no subsequent status data. Instead, a preselected address is sent, which can then be interpreted by the receiver as a synchronization word. By regularly transmitting such a signal (e.g., once per second), good synchronization can be maintained even though communications between the mouse and the receiver are unidirectional.

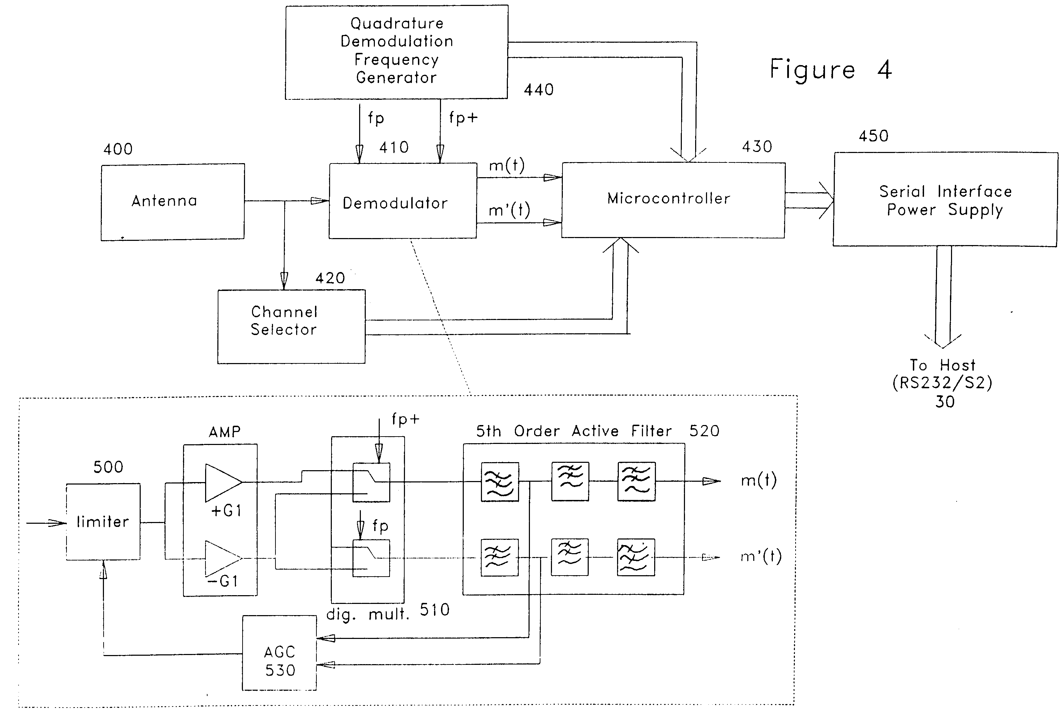

Referring next to Figure 4, the receiver of the present invention may be better understood. The receiver includes an antenna 400 coupled into a demodulator 410 and channel selector 420. The channel selector 420 supplies a signal to a microcontroller 430, which for example may be a 68HC05. A quadrature demodulation frequency generator 440 supplies a pair of quadrature filter functions to the demodulator 410, which uses the filter functions to extract partially data from the signal incoming from the antenna 400. The partially extracted data is then supplied to the microcontroller 430, where it is modified into a recognizable data signal. The data signal from the microcontroller 430 is then supplied through a standard interface, such as RS232 or PS/2, to a host system 30.

The demodulator 410 is further described in the lower portion of Figure 4, and can be seen to be a limiter circuit 500 which feeds the incoming signal to a pair of complementary amplifiers +G1 and -G1. The signals are then fed through a semi-digital multiplier 510, and operated upon by a fifth order active filter 520. An automatic gain control circuit 530 provides control of the limiter circuit 500.

The receiver is typically, although not in all cases necessarily, provided with an automatic gain control (AGC) circuit to ensure adequate reception of signals of varying strength. However, when no transmissions have occurred recently, the settling time of the AGC circuit -- which can be on the order of ten milliseconds -- can cause distortion which could lead to error. To avoid distortion, a preamble of 1's may be transmitted after each extended period of no transmission to stabilize the AGC. The preamble will preferably not include a start sequence (101) in a preferred embodiment, to ensure that no erroneous information is recorded while the AGC circuit stabilizes.

As can be appreciated from the foregoing, the omnidirectional transmission of the signal from the transmitter in the mouse to the host adapter 20 eliminates most concerns about obstacles in the transmission path while at the same time permitting significantly improved freedom for the user by eliminating any mechanical connection from the mouse to the host system 480. In addition, the relatively low frequency operation avoids concerns of radio interference with other devices in the environment. It can further be appreciated that this same interface, while described here in detail only in connection with an electronic mouse, can similarly be used with numerous other peripherals not requiring signal bandwidths beyond the relatively low frequency operation of the interface.

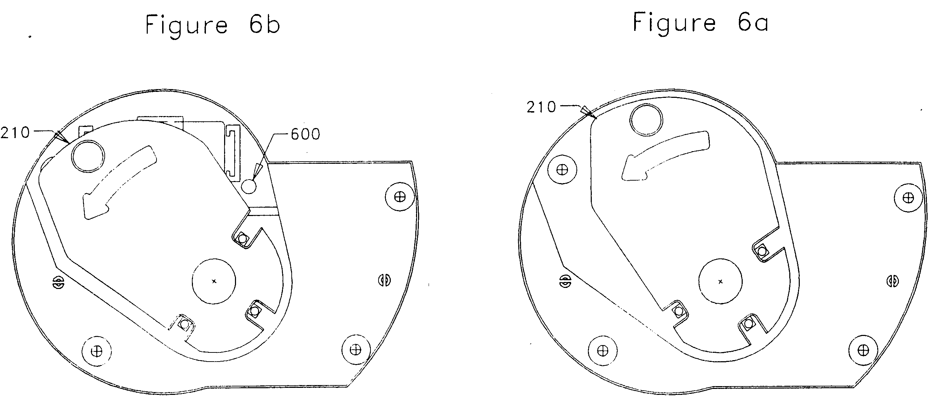

Another feature of the present invention is the ability to select a channel for communication between the mouse 10 and the host adapter 20. With reference to Figure 6, to permit the user to select a communications channel, a photodetector 600 is disposed within the cavity normally covered by the belly door 210. By rotating the belly door 210 to permit light to strike the photodetector 600, channel selection logic 610 is enabled. Then, by actuating a preselected one of the switches, for example switch 150a, the user can scroll through the communications channels available. In an exemplary embodiment, eight such channels may be provided to avoid interference from other signals. The channel may similarly be changed at the host adapter 20 by use of channel switch 620.

Having fully described one embodiment of the present invention, it will be apparent to those of ordinary skill in the art that numerous alternatives and equivalents exist which do not depart from the invention set forth above. It is therefore to be understood that the invention is not to be limited by the foregoing description, but only by the appended claims.

## Claims

1. A computer peripheral system for communicating in at least one direction with a host system such as a personal computer or workstation comprising:

   a peripheral device including data encoding means and first magnetic coupling means;

   a host adapter including second electromagnetic coupling means and data decoding means, the first electromagnetic coupling means being electromagnetically coupled to the second electromagnetic coupling means during normal operation to permit transmission of data from the peripheral device to the host adapter, the host adapter further having interface means for communication of the decoded data to the host system.

2. In a multichannel communications system having a transmitter and a receiver each capable of operating on any of a plurality of channels, the method of selecting among the plurality of channels comprising:

   exposing a photosensitive device to enable channel selection; and

   actuation of mechanical switching means to scroll through the available communications channels.

3. A multichannel communications system including a transmitter capable of operation on at least a selected one of a plurality of channels and a receiver capable of receiving signals on at least a selected one of a plurality of channels, the improvement comprising:

   channel selection logic means for selecting which of a plurality of channels will be used by the transmitter for operation;

   user-actuatable means connected to the logic means for selecting among the plurality of channels; and

   photodetection means which in a first state inhibits the user-actuatable means from altering the channel selected by the channel selecting logic means, and in a second state permits the user-actuatable means to alter the channel selected by the channel selection logic means.

7

FIG-1

Figure 2

Figure 3

450 — Program Mode Optical Switch

390 — Reset Program

350 — Registers and CPU Interface

360 — Transmitter/Receiver

320 — Opto's Inter-face

340 — Clock Gen.

300 — Opto's Block 310

XT1

XT2

380 — Booster

330 — CPU

440 — display

430 — Channel Fine Tuning

410 — low volt.

420 — V+

150A
150B
150C

160

10

Figure 4

EP 0 505 126 A2

EP 0 505 126 A2

Sample Optos
and Switches
at High Speed

Figure 5

Action
at either
Optos or
Switches?

Yes

No

Sample Optos
and Switches
at Med. Speed

Action
at either
Optos or
Switches?

Yes

No

Sample Optos
and Switches
at Low Speed

Action
at either
Optos or
Switches?

Yes

Figure 6a

Figure 6b